# FASCICULE DE BREVET EUROPEEN

(11) **EP 1 468 910 B1**
(45) Date de publication et mention de la délivrance du brevet: **14.09.2005**
(21) Numéro de dépôt: 04290669.3
(22) Date de dépôt: 11.03.2004
(51) Int. Cl.: B64G 1/22, B64G 1/44, B64G 1/66

(54) **Ensemble d'éléments, pliable et déployable, monté à bord d'un engin spatial**
Faltbarer und ausfahrbarer Satz von Elementen in einem Raumfahrzeug
Foldable and deployable assembly of elements in a spacecraft

(30) Priorité: 14.04.2003 FR 0304632
(43) Date de publication de la demande: 20.10.2004
(73) Titulaire: EADS SPACE Transportation SAS, 75116 Paris (FR)
(72) Inventeur: Desagulier, Christian, 78700 Conflans Sainte Honorine (FR); Cordier, Patrick, 78300 Montesson (FR); Baril, Stéphane, 78510 Triel/Seine (FR)
(74) Mandataire: Bonnetat, Christian

(56) Documents cités:
- US-A- 3 510 086
- US-A- 3 606 211
- PATENT ABSTRACTS OF JAPAN vol. 2000, no. 21, 3 août 2001 (2001-08-03) & JP 2001 106196 A (NIPPON TELEGR & TELEPH CORP), 17 avril 2001 (2001-04-17)

## Description

La présente invention concerne un ensemble d'éléments, pliable et déployable, monté à bord d'un engin spatial.

On sait que de nombreux dispositifs, tels que générateurs solaires, antennes radioélectriques, pare-soleil, etc ... sont constitués par un ensemble d'éléments articulés entre eux pour que ledit ensemble puisse être replié et occuper un encombrement minimal à bord d'un engin spatial, avant et pendant le lancement de celui-ci. Après mise dans l'espace dudit engin, ledit ensemble d'éléments est déployé pour que le dispositif puisse prendre sa configuration opérationnelle.

Pour l'articulation de tels éléments, il est connu d'utiliser des systèmes d'articulation à déploiement automatique, tels que ceux décrits, par exemple, dans les documents US-3 386 128, FR-2 122 087 et FR-2 635 077. Pour leur déploiement automatique, ces systèmes utilisent l'énergie de ressorts bandés en position repliée desdits éléments.

De tels systèmes d'articulation automatiques sont relativement lourds et compliqués et leur déploiement est difficilement contrôlable notamment en ce qui concerne l'instant initial et la vitesse de déploiement.

Par exemple, les documents US 3606211, US 3510086 et JP 2001106196 montrent des systèmes d'articulation utilisant des tubes gonflables.

La présente invention a pour objet de remédier à ces inconvénients.

A cette fin, selon l'invention, l'ensemble d'au moins deux éléments, qui est destiné à être monté à bord d'un engin spatial et dans lequel lesdits éléments peuvent occuper l'un par rapport à l'autre, soit une position repliée, soit une position déployée, est remarquable en ce que lesdits éléments sont solidarisés d'une même face d'un matelas gonflable souple et en ce que, à l'état replié desdits éléments, ledit matelas est à l'état dégonflé et est plié de façon que lesdits éléments se trouvent, deux à deux, de part et d'autre d'un pli dudit matelas.

Ainsi, lorsque, à partir de l'état replié desdits éléments et de l'état dégonflé dudit matelas, ce dernier est gonflé, l'augmentation de volume consécutive dudit matelas a pour conséquence d'ouvrir les plis de ce dernier et, par suite, de déployer ledit matelas et les éléments qu'il porte.

Le gonflage dudit matelas pourrait résulter de l'expansion, dans l'espace, du gaz contenu dans ledit matelas à l'état dégonflé, à terre. Cependant, pour éviter toute complication qui serait due à l'air résiduel dans le matelas pendant le lancement de l'engin spatial, il est préférable que, à terre, ledit matelas soit mis sous vide et que, dans l'espace, le gonflage soit obtenu par insufflation d'un gaz de gonflage.

Le verrouillage desdits éléments l'un par rapport à l'autre en position déployée peut être obtenu de nombreuses façons différentes. Par exemple, ledit verrouillage peut être obtenu par une rigidification du matelas à l'aide de tout système de rigidification physico-chimique en orbite, par exemple une résine durcissable. Dans ce dernier cas, ledit matelas peut être imprégné intérieurement d'une telle résine susceptible d'être polymérisée par un produit catalyseur apporté par le gaz de gonflage dudit matelas. Ledit matelas peut également être imprégné extérieurement d'une résine polymérisable sous l'action des rayons ultraviolets.

On remarquera que, du fait d'un tel verrouillage desdits éléments l'un par rapport à l'autre en position déployée, il n'est pas utile de maintenir à une valeur nominale la pression de gonflage dans ledit matelas pour rigidifier ce dernier, ce qui serait délicat à obtenir, à cause des inévitables microfuites dans le circuit de gonflage.

Suivant le mode de formation desdits plis dans le matelas dégonflé, ledit matelas replié peut soit être disposé entre deux desdits éléments adjacents, soit entourer deux tels éléments adjacents.

Dans le cas où ledit ensemble comporte une pluralité d'éléments formant au moins un alignement, il est avantageux que, à l'état dégonflé dudit matelas et à l'état replié desdits éléments, ledit matelas soit replié sur lui-même autour de lignes de pliage qui passent chacune entre deux éléments consécutifs dudit alignement et qui sont dirigées transversalement audit alignement, de façon que, alternativement, ledit matelas replié soit disposé entre deux éléments consécutifs et entoure deux éléments consécutifs.

Si, de plus, ladite pluralité d'éléments forme un agencement de lignes et de colonnes, à l'état dégonflé dudit matelas et à l'état replié desdits éléments, ledit matelas est avantageusement repliable sur lui-même autour de lignes de pliage qui passent chacune entre deux colonnes et/ou lignes d'éléments, de façon que, alternativement, ledit matelas replié soit disposé entre deux colonnes et/ou lignes d'éléments consécutives et entoure deux colonnes et/ou lignes d'éléments consécutives.

Les figures du dessin annexé feront bien comprendre comment l'invention peut être réalisée. Sur ces figures, des références identiques désignent des éléments semblables.
La figure 1 montre, en coupe partielle schématique, un ensemble d'éléments conforme à la présente invention, en position pliée.
La figure 2 illustre schématiquement le déploiement de l'ensemble d'éléments montré par la figure 1.
Les figures 3 et 4 illustrent, de façon schématique, respectivement en coupe et en vue de dessus, l'ensemble d'éléments de la figure 1 en position déployée.
La figure 5 montre schématiquement un autre mode de réalisation dudit ensemble d'éléments conforme à la présente invention.

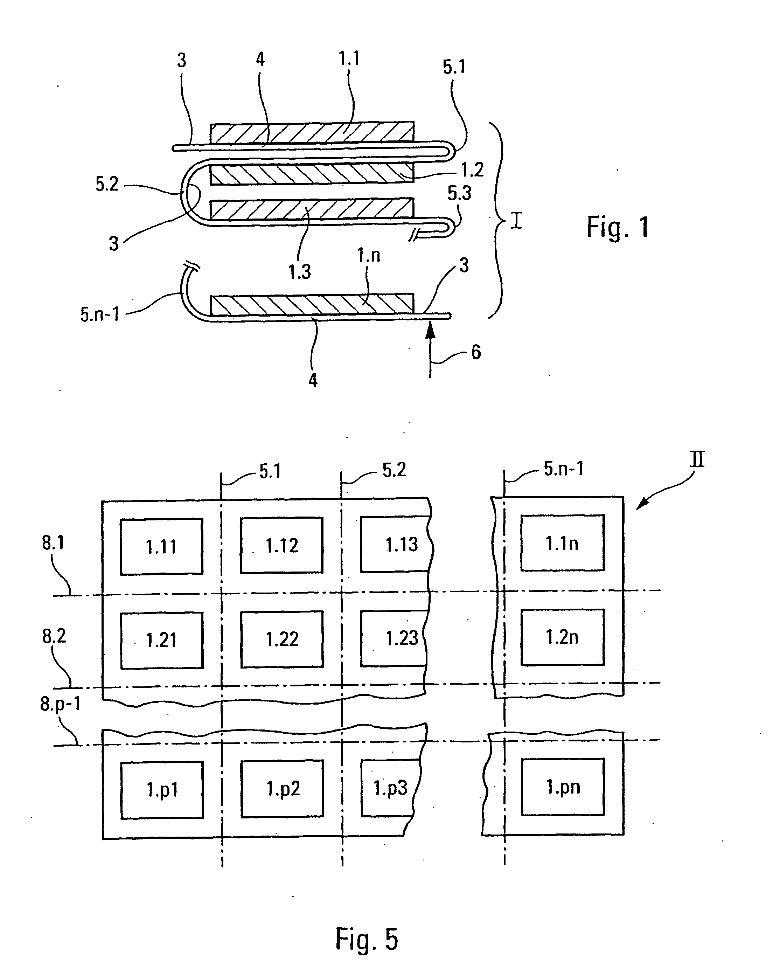

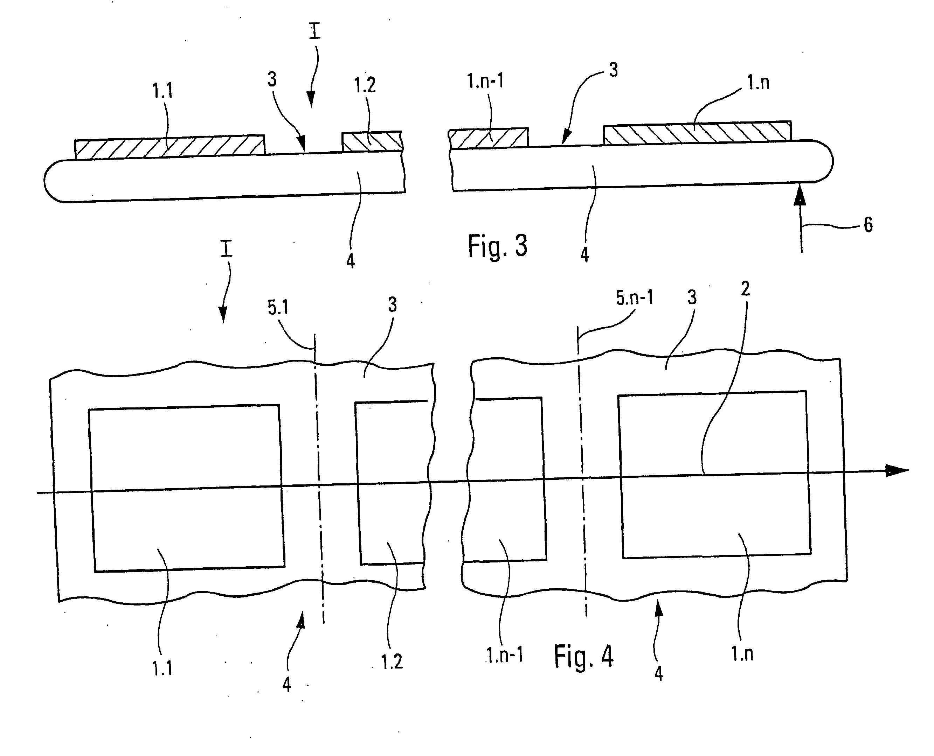

L'ensemble d'éléments I, conforme à la présente invention et représenté sur les figures 1 à 4, comporte n éléments portant respectivement les références 1.1, 1.2, 1.3, ..., 1.n-1, 1.n. Ces éléments appartiennent à un dispositif (générateur solaire, antenne, pare-soleil, etc ...) monté plié à bord d'un engin spatial et déployé après mise dans l'espace de ce dernier. A l'état plié (voir la figure 1), les éléments 1.1 à 1.n sont par exemple rabattus l'un sur l'autre et maintenus dans cet état par des verrous (non représentés). Lorsqu'ils sont déployés, lesdits éléments 1.1 à 1.n forment un alignement, comme cela est symbolisé sur la figure 4 par l'axe 2.

Ces éléments 1.1 à 1.n sont tous solidarisés d'une même face 3 d'un matelas gonflable souple 4.

Comme le montre la figure 1, à l'état replié desdits éléments 1.1 à 1.n, le matelas 4 est à l'état dégonflé et est plié de façon que lesdits éléments 1.1 à 1.n se trouvent, deux à deux, de part et d'autre d'une ligne de pliage 5.1, 5.2, ..., 5.n-1 dudit matelas 4. Ces lignes de pliage, ou plis, 5.1 à 5.n-1 passent chacune entre deux éléments 1.1 à 1.n consécutifs et sont dirigées transversalement audit alignement 2 (comme illustré sur la figure 4).

Dans le mode de pliage illustré sur la figure 1, à l'état dégonflé du matelas 4 et à l'état replié des éléments 1.1 à 1.n, on peut voir que, alternativement, le matelas 4 :
- est disposé entre les deux éléments adjacents 1.1 et 1.2 ; 1.3 et 1.4, ..., etc ... ; et
- entoure les deux éléments adjacents 1.2 et 1.3 ; ... ; 1.n-1 et 1.n.

Ce matelas 4 peut, de préférence, être gonflé à partir d'une source de gaz (non représentée) par l'intermédiaire d'une conduite de gonflage 6.

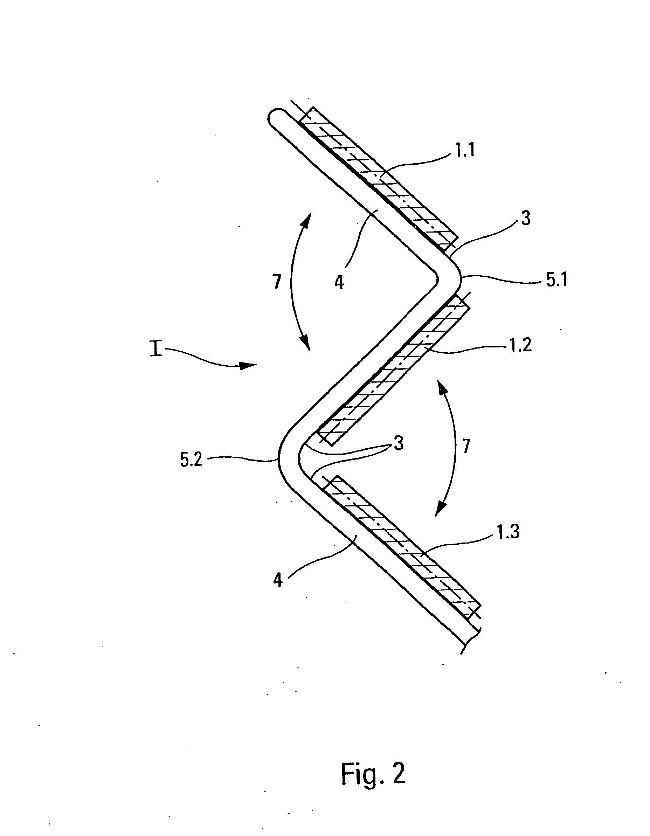

Ainsi, lorsque lesdits éléments 1.1 à 1.n, à l'état replié, doivent être déployés et que lesdits verrous de maintien dans cet état ont été éliminés, du gaz de gonflage est envoyé dans la conduite 6, ce qui permet de gonfler ledit matelas 4. L'augmentation de volume de ce dernier tend à ouvrir les plis qu'il comporte et lesdits éléments sont écartés mutuellement les uns des autres par des rotations autour d'axes au moins approximativement confondus avec lesdites lignes de pliage 5.1 à 5.n-1, comme cela est illustré schématiquement sur la figure 2 à l'aide des flèches 7. En continuant le gonflage, on peut déployer complètement ledit matelas 4 et lesdits éléments 1.1 à 1.n pour arriver à l'état déployé illustré par les figures 3 et 4.

On voit ainsi aisément que, grâce à la présente invention, on peut maîtriser totalement l'instant du début de déploiement et le processus de déploiement, ainsi que supprimer totalement tout système d'articulation mécanique.

Lorsque le déploiement complet est obtenu, le matelas 4 peut être rigidifié dans cette position déployée, par exemple à l'aide d'une résine durcissable. Celle-ci peut pré-imprégner sur les faces extérieures dudit matelas et être du type polymérisable par les rayons ultraviolets de l'espace. En variante, la résine durcissable peut pré-imprégner la paroi interne du matelas 4 et être sensible à un agent de polymérisation véhiculé par le gaz de gonflage.

Sur la figure 5, on a représenté, à l'état déployé, un agencement II d'une pluralité d'éléments 1.11 à 1.pn. Cet agencement II comporte p lignes, chacune semblable à l'alignement 2 de la figure 4, disposées de façon à ce que lesdits éléments forment de plus des colonnes. On comprendra aisément que, dans ce cas, les lignes de pliage 5.1, 5.2, ..., 5.n-1 passent chacune entre deux colonnes adjacentes d'éléments. Ainsi, à l'état dégonflé et à l'état replié du matelas 4, les colonnes d'éléments sont repliées les unes sur les autres autour des lignes de pliage 5.1, 5.2, ..., 5.n-1, à la manière de ce qui est représenté sur la figure 1 pour les éléments 1.1 à 1.n.

En plus des lignes de pliage intercolonnes 5.1 à 5.n-1, l'agencement II peut comporter des lignes de pliage interlignes 8.1 à 8.p-1 pour replier sur elles-mêmes (à la manière de la figure 1) lesdites colonnes d'éléments déjà repliées les unes sur les autres autour des lignes de pliage 5.1 à 5.n-1.

## Revendications

1. Ensemble (I, II) d'au moins deux éléments (1.1 à 1.n, 1.11 à 1.pn), qui est destiné à être monté à bord d'un engin spatial et dans lequel lesdits éléments peuvent occuper l'un par rapport à l'autre, soit une position repliée, soit une position déployée,
**caractérisé en ce que** lesdits éléments (1.1 à 1.n, 1.11 à 1.pn) sont solidarisés d'une même face (3) d'un matelas gonflable souple (4) et **en ce que**, à l'état replié desdits éléments, ledit matelas (4) est à l'état dégonflé et est plié de façon que lesdits éléments se trouvent, deux à deux, de part et d'autre d'un pli (5.1 à 5.n-1) dudit matelas.

2. Ensemble selon la revendication 1,
**caractérisé en ce que** le gonflage dudit matelas (4) résulte de l'expansion, dans l'espace, du gaz contenu dans ledit matelas (4) à l'état plié, à terre.

3. Ensemble selon la revendication 1,
**caractérisé en ce que** le gonflage dudit matelas (4) est obtenu par insufflation d'un gaz de gonflage (en 6).

4. Ensemble selon l'une des revendications 1 à 3,
**caractérisé en ce qu'**il comporte des moyens de rigidification dudit matelas à l'état déployé desdits éléments.

5. Ensemble selon la revendication 4,
**caractérisé en ce que** lesdits moyens de rigidification comportent une résine durcissable.

6. Ensemble selon l'une des revendications 1 à 5,
**caractérisé en ce que**, à l'état dégonflé dudit matelas (4) et à l'état replié desdits éléments (1.1 à 1.n), ledit matelas replié (4) est disposé entre deux éléments ajacents.

7. Ensemble selon l'une des revendications 1 à 5,
**caractérisé en ce que**, à l'état dégonflé dudit matelas et à l'état replié desdits éléments, ledit matelas replié entoure deux éléments adjacents.

8. Ensemble selon les revendications 6 et 7,
**caractérisé en ce qu'**il comporte une pluralité d'éléments formant au moins un alignement et **en ce que**, à l'état dégonflé dudit matelas et à l'état replié desdits éléments, ledit matelas est replié sur lui-même autour de lignes de pliage qui passent chacune entre deux éléments consécutifs dudit alignement et qui sont dirigées transversalement audit alignement, de façon que, alternativement, ledit matelas replié soit disposé entre deux éléments consécutifs et entoure deux éléments consécutifs.

9. Ensemble selon la revendication 8,
**caractérisé en ce que** ladite pluralité d'éléments forme un agencement de lignes et de colonnes et **en ce que**, à l'état dégonflé dudit matelas et à l'état replié desdits éléments, ledit matelas est repliable sur lui-même autour de lignes de pliage qui passent chacune entre deux colonnes d'éléments, de façon que, alternativement, ledit matelas replié soit disposé entre deux colonnes d'éléments consécutives et entoure deux colonnes d'éléments consécutives.

10. Ensemble selon l'une des revendications 8 ou 9,
**caractérisé en ce que** ladite pluralité d'éléments forme un agencement de lignes et de colonnes et **en ce que**, à l'état dégonflé dudit matelas et à l'état replié desdits éléments, ledit matelas est repliable sur lui-même autour de lignes de pliage qui passent chacune entre deux lignes d'éléments, de façon que, alternativement, ledit matelas replié soit disposé entre deux lignes d'éléments consécutives et entoure deux lignes d'éléments consécutives.

## Patentansprüche

1. Satz (1, 11) aus mindestens zwei Elementen (1.1 bis 1.n, 1.11 bis 1.pn), der dazu bestimmt ist, an Bord eines Raumfahrzeugs eingebaut zu werden, und in dem die Elemente in Relation zueinander entweder eine zusammengefaltete Stellung oder eine ausgefahrene Stellung einnehmen können,
**dadurch gekennzeichnet, dass** die Elemente (1.1 bis 1.n, 1.11 bis 1.pn) durch dieselbe Seite (3) einer aufblasbaren, weichen Matte (4) miteinander verbunden sind, und wobei sich die Matte (4) in zusammengefaltetem Zustand der Elemente in nicht aufgeblasenem Zustand befindet und so zusammengefaltet ist, dass sich die Elemente paarweise auf beiden Seiten eines Falzes (5.1 bis 5.n-1) der Matte befinden.

2. Satz nach Anspruch 1,
**dadurch gekennzeichnet, dass** das Aufblasen der Matte (4) **dadurch** erfolgt, dass sich das Gas, das sich auf der Erde in zusammengefaltetem Zustand in der Matte befindet, im Raum ausdehnt.

3. Satz nach Anspruch 1,
**dadurch gekennzeichnet, dass** das Aufblasen der Matte (4) durch Einblasen eines Füllgases (6) erfolgt.

4. Satz nach einem der Ansprüche 1 bis 3,
**dadurch gekennzeichnet, dass** dieser Verstärkungsmittel für die Matte in ausgefahrenem Zustand der Elemente aufweist.

5. Satz nach Anspruch 4,
**dadurch gekennzeichnet, dass** die Verstärkungsmittel ein aushärtbares Harz aufweisen.

6. Satz nach einem der Ansprüche 1 bis 5,
**dadurch gekennzeichnet, dass** die zusammengefaltete Matte (4) in nicht aufgeblasenem Zustand der Matte (4) und in zusammengefaltetem Zustand der Elemente (1.1 bis 1.n) zwischen zwei nebeneinanderliegenden Elementen angeordnet ist.

7. Satz nach einem der Ansprüche 1 bis 5,
**dadurch gekennzeichnet, dass** die zusammengefaltete Matte in nicht aufgeblasenem Zustand der Matte und in zusammengefaltetem Zustand der Elemente zwei nebeneinanderliegende Elemente umgibt.

8. Satz nach den Ansprüchen 6 und 7,
**dadurch gekennzeichnet, dass** dieser eine Vielzahl von Elementen aufweist, die mindestens eine Reihe bilden, und dass die Matte in nicht aufgeblasenem Zustand der Matte und in zusammengefaltetem Zustand der Elemente auf sich selbst um Faltlinien herum zusammengefaltet ist, die alle zwischen zwei aufeinanderfolgenden Elementen der Reihe verlaufen und quer zur Reihe angeordnet sind, so dass die zusammengefaltete Matte im Wechsel zwischen zwei aufeinanderfolgenden Elementen angeordnet ist und zwei aufeinanderfolgende Elemente umgibt.

9. Satz nach Anspruch 8,
**dadurch gekennzeichnet, dass** die Vielzahl aus Elementen eine Anordnung aus Zeilen und Spalten bildet, und dass die Matte in nicht aufgeblasenem Zustand der Matte und in zusammengefaltetem Zustand der Elemente auf sich selbst um Faltlinien herum faltbar ist, die alle zwischen zwei aufeinanderfolgenden Spalten aus Elementen verlaufen, so dass die zusammengefaltete Matte im Wechsel zwischen zwei aufeinanderfolgenden Spalten aus Elementen angeordnet ist und zwei aufeinanderfolgende Spalten aus Elementen umgibt.

10. Satz nach einem der Ansprüche 8 oder 9,
**dadurch gekennzeichnet, dass** die Vielzahl aus Elementen eine Anordnung aus Zeilen und Spalten bildet, und dass die Matte in nicht aufgeblasenem Zustand der Matte und in zusammengefaltetem Zustand der Elemente auf sich selbst um Faltlinien herum faltbar ist, die alle zwischen zwei Zeilen aus Elementen verlaufen, so dass die zusammengefaltete Matte im Wechsel zwischen zwei aufeinanderfolgenden Zeilen aus Elementen angeordnet ist und zwei aufeinanderfolgende Zeilen aus Elementen umgibt.

## Claims

1. An assembly (I, II) of at least two elements (1.1 to 1.n, 1.11 to 1.pn) that is intended to be mounted on board a spacecraft and in which said elements may occupy relative to one another either a folded position or a deployed position, **characterized in that** said elements (1.1 to 1.n, 1.11 to 1.pn) are secured to the same side (3) of a flexible inflated mattress (4) and **in that**, when said elements are in the folded state, said mattress (4) is in the deflated state and is folded so that said elements are situated in pairs on either side of a fold (5.1 to 5.n-1) of said mattress.

2. The assembly as claimed in claim 1, **characterized in that** the inflation of said mattress (4) results from the expansion, in space, of the gas contained in said mattress (4) in the folded state, on earth.

3. The assembly as claimed in claim 1, **characterized in that** the inflation of said mattress (4) is achieved by blowing in an inflating gas (at 6).

4. The assembly as claimed in one of claims 1 to 3, **characterized in that** it comprises means for stiffening said mattress when said elements are in the deployed state.

5. The assembly as claimed in claim 4, **characterized in that** said stiffening means comprise a curable resin.

6. The assembly as claimed in one of claims 1 to 5, **characterized in that**, when said mattress (4) is in the deflated state and when said elements (1.1. to 1.n) are in the folded state, said folded mattress (4) is arranged between two adjacent elements.

7. The assembly as claimed in one of claims 1 to 5, **characterized in that**, when said mattress is in the deflated state and when said elements are in the folded state, said folded mattress surrounds two adjacent elements.

8. The assembly as claimed in claims 6 and 7, **characterized in that** it comprises a plurality of elements forming at least one alignment and **in that**, when said mattress is in the deflated state and when said elements are in the folded state, said mattress is folded on itself around fold lines that each pass between two consecutive elements of said alignment and that are directed transversely with respect to said alignment so that, in turn, said folded mattress is arranged between two consecutive elements and surrounds two consecutive elements.

9. The assembly as claimed in claim 8, **characterized in that** said plurality of elements forms an array of rows and columns and **in that**, when said mattress is in the deflated state and when said elements are in the folded state, said mattress can be folded on itself around fold lines that each pass between two columns of elements so that, in turn, said folded mattress is arranged between two consecutive columns of elements and surrounds two consecutive columns of elements.

10. The assembly as claimed in either of claims 8 and 9, **characterized in that** said plurality of elements forms an array of rows and columns and **in that**, when said mattress is in the deflated state and when said elements are in the folded state, said mattress can be folded on itself around fold lines that each pass between two rows of elements so that, in turn, said folded mattress is arranged between two consecutive rows of elements and surrounds two consecutive rows of elements.
